# FASCICULE DE BREVET EUROPEEN

(11) **EP 4 015 126 B1**
(45) Date de publication et mention de la délivrance du brevet: **28.02.2024**
(21) Numéro de dépôt: 21215010.6
(22) Date de dépôt: 16.12.2021
(51) Int. Cl.: B23K 9/007, B23K 9/09, B23K 9/167

(54) **PROCÉDÉ DE POINTAGE DU TYPE TIG DE DEUX TÔLES OU PIÈCES, PROCÉDÉ DE SOUDAGE ET POSTE À SOUDER CORRESPONDANTS**
VERFAHREN ZUM HEFTEN VON ZWEI BLECHEN ODER TEILEN, ENTSPRECHENDES SCHWEISSVERFAHREN UND SCHWEISSGERÄT
TIG-TACK-WELDING METHOD OF TWO SHEETS OR WORKPIECES, CORRESPONDING WELDING METHOD AND WELDING STATION

(30) Priorité: 17.12.2020 FR 2013496
(43) Date de publication de la demande: 22.06.2022
(73) Titulaire: GYS, 53940 Saint-Berthevin (FR)
(72) Inventeur: BOUYGUES, Bruno, 75016 Paris (FR); LAVERDA, Mario, 53000 Laval (FR)
(74) Mandataire: Vidon Brevets & Stratégie

(56) Documents cités:
- EP-A1- 2 085 171
- EP-A1- 3 693 117
- US-A1- 2019 168 328
- US-B2- 7 256 368

## Description

### Domaine de l'invention

La présente invention se rapporte au domaine du pointage et du soudage du type TIG (pour « *Tungsten Inert Gas* » en anglais) mis en oeuvre pour pointer et/ou souder deux tôles ou pièces, dont au moins une est en aluminium, en un alliage d'aluminium ou en un alliage léger, notamment.

La technique de pointage et le soudage de la présente invention est particulièrement, mais non exclusivement, adaptée aux domaines de l'automobile, de l'aéronautique et de la tuyauterie industrielle, de la chaudronnerie/ Métallerie.

Plus précisément, la présente technique propose un choix judicieux des paramètres de pointage/soudage afin de solidariser deux tôles ou pièces de façon aisée et rapide, sans avoir recours à une matière d'apport.

### Art antérieur

Le pointage est une opération spécifique de soudage qui consiste, préalablement au soudage complet des pièces entre elles, à réaliser, tout au long du joint à souder, des cordons ou points de soudure de faible longueur afin de maintenir ensemble les pièces à assembler. Le pointage permet également de maintenir un écart constant des bords des pièces à souder et de limiter les éventuelles déformations des pièces lors du soudage.

Le pointage des pièces en acier ou en acier inoxydable (connu sous le diminutif inox) par soudage du type TIG est connu et maîtrisé depuis de nombreuses années. Cette opération est généralement effectuée en appliquant un courant continu (DC).

Or, ce principe de pointage/soudage du type TIG en courant continu DC ne fonctionne pas lorsqu'une tôle en aluminium, en alliage d'aluminium ou en alliage léger notamment, doit être pointée/soudée. Un procédé de pointage/soudage du type TIG dédié à l'aluminium est connu du document US7256368.

Par exemple, pour l'aluminium, la couche d'alumine, qui résulte d'une oxydation naturelle de l'aluminium, a un point de fusion de l'ordre de 2070°C, tandis que l'aluminium a un point de fusion qui est de l'ordre des 660°C. C'est cette différence de température de fusion qui nécessite des inversions de polarité, afin de casser la couche d'alumine pour ensuite permettre de fusionner l'aluminium. Ainsi, une tôle en alliage d'aluminium nécessite l'utilisation d'un courant alternatif (AC) pour être soudée.

Par ailleurs, afin d'optimiser le temps d'exécution des opérations de pointage/soudage, dans le but de gagner en productivité, la demanderesse a pour volonté de ne pas utiliser de métal d'apport pour réaliser ces opérations.

Toutefois, le pointage du type TIG de tôles en alliage d'aluminium par l'application d'une simple impulsion de courant alternatif AC, sans apporter de métal d'apport, ne permet pas de solidariser efficacement deux tôles.

En effet, le soudage de l'aluminium est extrêmement complexe sans métal d'apport puisque les inversions de polarité du courant alternatif perturbent l'arc électrique. L'arc électrique en courant alternatif AC n'est donc pas aussi stable qu'avec un courant continu DC, ce qui complexifie grandement les opérations de pointage ou de soudage.

Les solutions actuelles de pointage des tôles en alliage d'aluminium ou en alliage léger sont donc relativement complexes, chronophages et généralement réservées à des opérateurs de soudage très compétents et expérimentés.

Les solutions actuelles de pointage des tôles, notamment celles en alliage d'aluminium, ne sont donc pas satisfaisantes.

Il existe donc un besoin de fournir une solution de pointage et de soudage du type TIG de deux tôles, dont au moins l'une d'elles est en aluminium, en alliage d'aluminium ou en alliage léger notamment, qui soit rapide et simple à mettre en oeuvre, sans nécessiter de matière d'apport.

### Résumé de l'invention

La présente technique permet de résoudre au moins certains des inconvénients soulevés par l'art antérieur. Plus précisément, la présente technique se rapporte à un procédé de pointage du type TIG de deux tôles ou pièces (tubes par exemple), ledit procédé comprenant, pour chaque zone ou point de pointage desdites tôles ou desdites tubes, un cycle de pointage comprenant successivement l'application d'au moins un courant continu DC lisse ou pulsé et d'au moins un courant alternatif AC lisse ou pulsé.

Après de nombreux tests et recherches effectués, la demanderesse a conclu que l'application successive d'au moins un courant continu puis d'au moins un courant alternatif en pointage/soudage TIG permettait un pointage étonnamment performant d'une tôle en aluminium, en alliage d'aluminium ou en alliage léger notamment, sans utiliser de métal d'apport.

La succession des différents courants est choisie en fonction de la matière et de l'épaisseur des tôles à pointer/souder.

Le procédé selon l'invention est défini à la revendication 1.

Le procédé peut ainsi mettre en oeuvre une première séquence de courant continu DC lisse ou pulsé, puis éventuellement une ou plusieurs autres séquences de courant continu DC lisse ou pulsé, suivie d'une séquence ou de plusieurs séquences de courant alternatif DC lisse ou pulsé.

Un courant continu lisse peut par exemple comprendre une phase de montée progressive du courant jusqu'à une valeur seuil puis une phase de maintien du courant à cette valeur seuil avant une dernière phase de chute du courant.

Un courant continu pulsé conserve une même polarité, positive ou négative (au contraire d'un courant alternatif dont la polarité varie), avec une intensité de soudage variable.

Un courant continu pulsé peut par exemple comprendre une phase de montée progressive du courant jusqu'à une valeur seuil puis une phase de variation du courant sous la forme d'un signal carré (créneaux) autour de cette valeur seuil, avant une dernière phase de chute du courant.

Un courant alternatif pulsé n'est pas purement sinusoïdal ou carré par exemple mais présente des impulsions autour des valeurs d'extrémité supérieure et inférieure.

La présente technique est particulièrement adaptée pour un procédé de pointage dans lequel au moins une desdites tôles ou une desdites pièces est en aluminium, en un alliage d'aluminium ou en un alliage léger notamment.

Selon un aspect particulier de la présente technique, ledit cycle de pointage comprend :
- une première séquence d'application d'un courant continu DC lisse durant une première durée prédéterminée ;
- une deuxième séquence d'application d'un courant continu DC pulsé durant une deuxième durée prédéterminée ; et
- une troisième séquence d'application d'un courant alternatif AC pulsé durant une troisième durée prédéterminée.

C'est l'enchainement particulier de ces trois séquences particulières de courant qui permet d'obtenir un pointage optimal et simple à réaliser, quelle que soit l'expérience de l'opérateur de soudage.

Plus précisément, la première séquence d'application d'un courant continu DC lisse permet de préchauffer la tôle à assembler et de commencer à affaiblir la couche d'alumine, lors du pointage/soudage d'une tôle en aluminium ou en alliage d'aluminium, par exemple.

La deuxième séquence d'application d'un courant continu DC pulsé permet d'obtenir une précision de chauffe souhaitée qui soit optimale et une constriction de l'arc électrique d'une plus grande précision.

La troisième séquence d'application d'un courant alternatif AC pulsé permet de maintenir la précision de l'arc électrique et d'éviter que l'arc électrique ne soit attiré par une pièce plus que l'autre dans le but de fusionner de façon précise la jonction des deux tôles à assembler.

Selon un autre aspect, lesdites première, deuxième et troisième séquences sont réalisées successivement et dans cet ordre, et ledit cycle de pointage présente une durée inférieure ou égale à 2 secondes.

La mise en oeuvre successive des séquences de courant dans ce laps de temps particulier permet un pointage rapide, simple et précis qui peut être réalisé par des opérateurs de soudage de tous niveaux.

Selon aspect de la présente technique, la valeur dudit courant continu lisse de la première séquence est comprise entre 1 et 500 ampères (A).

Selon un autre aspect, ladite première durée prédéterminée dudit courant continu lisse est comprise entre 10 et 1000 ms.

Ces valeurs concernant la première séquence d'application d'un courant continu DC lisse ont été judicieusement sélectionnées par la demanderesse afin de préchauffer la tôle à assembler et de commencer à affaiblir la couche d'alumine, lors du pointage/soudage d'une tôle en aluminium ou en alliage d'aluminium.

Selon un autre aspect de la présente technique, ledit courant continu pulsé de la deuxième séquence présente un courant de base compris entre 1 et 500 ampères et un courant de pic compris entre 2 et 500 ampères.

Selon un autre aspect, ledit courant continu pulsé présente une fréquence comprise entre 1Hz et 20 kHz.

Selon encore un autre aspect, ladite deuxième durée prédéterminée dudit courant continu pulsé est comprise entre 10 et 1000 ms.

Ces valeurs concernant la deuxième séquence d'application d'un courant continu DC pulsé ont été judicieusement sélectionnées par la demanderesse afin d'obtenir une précision de chauffe souhaitée qui soit optimale et une plus grande précision de l'arc électrique.

Selon encore un autre aspect de la présente technique, ledit courant alternatif pulsé de la troisième séquence oscille entre environ 1 et 500 ampères (A) et présente une fréquence comprise entre 20 et 500 Hz.

Selon un autre aspect, ledit courant alternatif pulsé varie entre un courant de base compris entre 1 et 500 ampères (A) et un courant de pic compris entre 2 et 500 ampères (A).

Selon encore un autre aspect, ledit courant alternatif pulsé est pulsé ou généré à une fréquence comprise entre 1 et 20 kHz.

Selon encore un autre aspect, ladite troisième durée prédéterminée dudit courant alternatif pulsé est comprise entre 10 et 1000 ms.

Ces valeurs concernant la troisième séquence d'application d'un courant alternatif AC pulsé ont été judicieusement sélectionnées par la demanderesse afin de ne pas perdre les bénéfices du courant continu DC pulsé, c'est-à-dire afin de maintenir la précision de l'arc électrique et d'éviter que l'arc électrique ne soit attiré par une pièce plus que l'autre dans le but de fusionner de façon précise la jonction des deux tôles à assembler.

La présente technique concerne également un procédé de soudage du type TIG de deux tôles ou pièces (des tubes par exemple), au moins une desdites tôles ou pièces étant en aluminium, en un alliage d'aluminium ou en un alliage léger notamment, ledit procédé de soudage comprenant la répétition du cycle de pointage du procédé de pointage décrit ci-dessus sur au moins une partie de la jonction entre lesdites tôles ou lesdites pièces.

Le procédé de soudage est donc une répétition du cycle de pointage.

Le procédé de soudage peut, selon un mode de réalisation particulièrement avantageux, s'abstenir des séquences de pré-gaz et de post-gaz entre chaque cycle comprenant les trois séquences de courant spécifiques à l'invention.

La présente technique concerne en outre un poste à souder du type TIG comprenant un générateur de courant apte à mettre en oeuvre ledit procédé de pointage décrit précédemment.

Avantageusement, ce poste est apte à mettre en oeuvre le soudage desdites tôles ou desdites pièces après pointage de ces dernières.

Un tel poste permet le pointage des tôles ou pièces avant le soudage de ces dernières, c'est-à-dire de réaliser des points de soudure qui assurent le maintien des pièces à assembler avant l'opération de soudage.

### Liste des Figures

La technique proposée, ainsi que les différents avantages qu'elle présente, seront plus facilement compris à la lumière de la description qui va suivre de modes de réalisation illustratifs et non limitatifs de celle-ci, et des dessins annexés parmi lesquels :
[Fig 1] est un graphique représentant le fonctionnement d'un générateur lors d'un cycle de pointage selon un mode de réalisation particulier de la technique proposée ;
[Fig 2] est un diagramme simplifié du procédé de pointage de la figure 1 ;
[Fig 3] est un graphique représentant le fonctionnement d'un générateur lors d'un cycle de soudage selon le premier mode de réalisation de la technique proposée ;
[Fig 4] est un diagramme simplifié du procédé de soudage selon la figure 3 ;
[Fig 5] est un graphique représentant le fonctionnement d'un générateur lors d'un cycle de pointage selon un mode de réalisation préférentiel de la technique proposée ;
[Fig 6] est un diagramme simplifié du procédé de pointage de la figure 5 ;
[Fig 7] est un graphique représentant le fonctionnement d'un générateur lors d'un cycle de soudage selon le mode de réalisation préférentiel de la technique proposée ; et
[Fig 8] est un diagramme simplifié du procédé de soudage de la figure 7.

### Description détaillée de l'invention

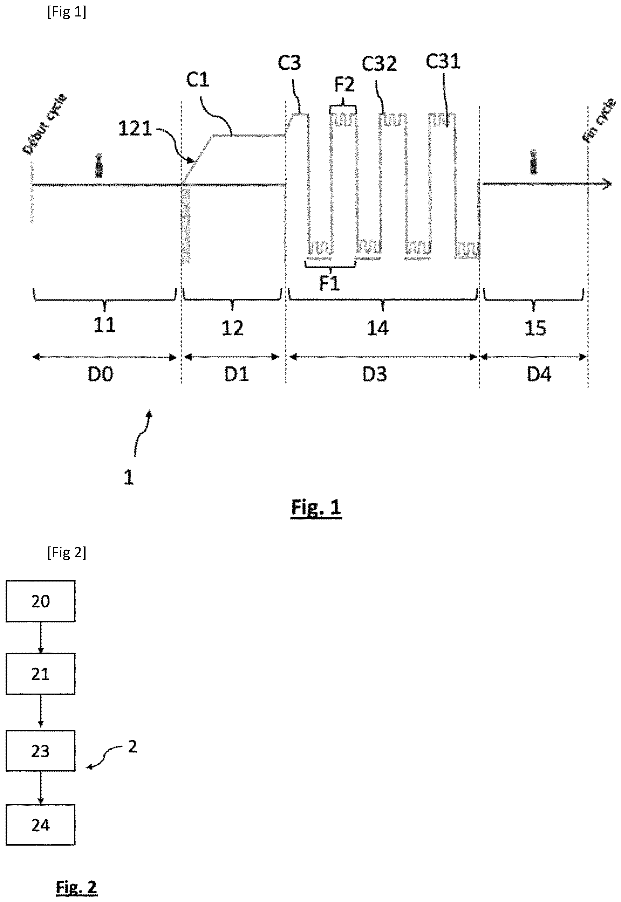

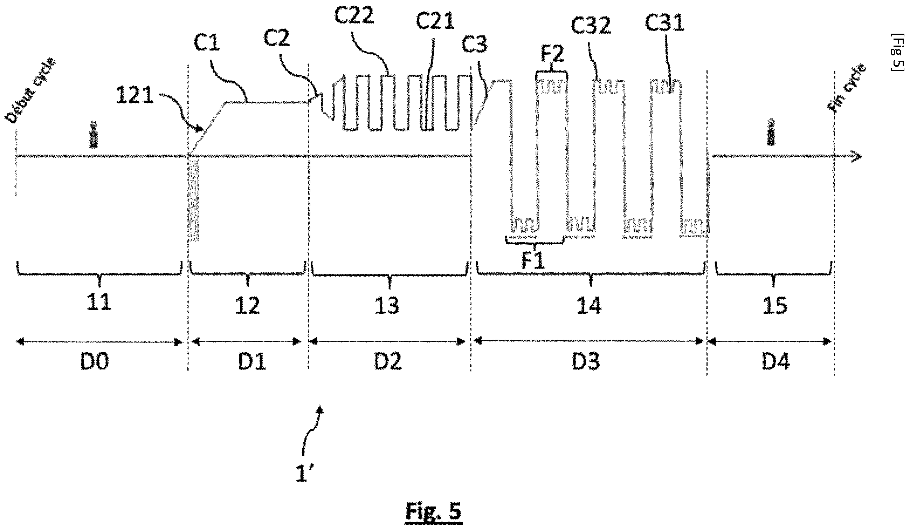

On illustre par la suite plusieurs modes de réalisation de la technique proposée, traités à titre de simples exemples illustratifs, et non limitatifs, à l'appui des figures 1 à 8. Plus précisément, les figures 1 à 4 illustrent des éléments utiles à la compréhension de l'invention mais qui n'en font pas partie, tandis que les figures 5 à 8 illustrent l'invention.

Les signaux/étapes identiques dans les différents modes de réalisation présentent la même référence numérique et ne sont pas décrits en détails à chaque occurrence afin de faciliter la lecture et la compréhension de la présente description.

La présente technique vise à fournir une solution de pointage et de soudage du type TIG pour solidariser deux tôles, ou pièces (des tubes, par exemple), qui sont appliquées l'une contre l'autre et dont au moins l'une d'elles est, par exemple, en aluminium, en un alliage d'aluminium ou en un alliage léger, tel que le laiton.

De préférence, les tôles à pointer/souder présentent une épaisseur comprise entre 0,4 mm et 6 mm.

Plus précisément, la présente technique consiste à appliquer un cycle de courant judicieusement sélectionné/défini à la suite de nombreux tests et recherches effectués dans ce domaine par la demanderesse. Ce cycle particulier de courant consiste de façon générale à associer un courant continu DC et un courant alternatif AC afin d'obtenir un résultat de pointage ou de soudage optimal.

Plus particulièrement, la présente technique concerne un procédé de pointage du type TIG de deux tôles ou de deux pièces, telles que des tubes, comprenant, pour chaque zone ou point de pointage et en fonction du matériau et de l'épaisseur des tôles, un cycle de pointage comprenant successivement l'application d'au moins un courant continu DC lisse ou pulsé, puis d'au moins un courant alternatif AC lisse ou pulsé.

On entend par courant continu lisse, un courant sensiblement constant pouvant éventuellement présenter une rampe permettant d'atteindre la valeur cible du courant lisse. On entend par courant continu pulsé, un courant dont la tension est variable. Notamment, une alimentation en courant continu pulsée fournit un courant d'une seule polarité avec une tension variable. Ainsi, contrairement au courant alternatif, la polarité du courant continu pulsé ne change pas. Comme le courant continu traditionnel, le courant continu pulsé conserve donc une seule polarité, positive ou négative.

La **figure 1** illustre un mode de réalisation particulier, utile à la compréhension de l'invention mais n'en faisant pas partie, d'un cycle 1 de pointage comprenant deux séquences, à savoir l'application d'un courant continu lisse C1 suivi de l'application d'un courant alternatif pulsé C3. Ce cycle particulier permet l'obtention d'un pointage et/ou, lorsqu'il est répété sur le joint de soudure (autrement dit la jonction entre les deux tôles), un soudage précis et efficace.

Classiquement, ce cycle de pointage 1 comprend une séquence de pré-gaz 11 qui a pour fonction de purger le conduit de la torche de soudage et d'assurer une atmosphère inerte avant l'amorçage.

Cette séquence de pré-gaz 11 présente une durée D0 comprise entre 10 et 1000 ms.

La séquence de pré-gaz 11 est suivie de l'application d'un courant continu DC lisse C1 puis d'un courant alternatif AC pulsé C3.

Plus précisément, le cycle de pointage 1 comprend une séquence 12 d'application d'un courant continu DC lisse C1. Cette séquence 12 présente une rampe de montée 121 qui permet une montée progressive du courant de soudage jusqu'à sa valeur nominale. Cette première séquence 12 d'application d'un courant continu DC lisse C1 favorise l'amorçage de l'arc électrique.

La valeur du courant continu DC lisse C1 est comprise entre 1 et 500 ampères. Cette séquence 12 d'application d'un courant continu DC lisse C1 présente une durée D1 comprise entre 10 et 1000 ms. La rampe de montée 121 présente quant à elle une durée comprise entre 10 et 1000 ms.

La durée D1 varie en fonction de la matière et de l'épaisseur des tôles à pointer/souder. Toutefois, cette durée D1 est relativement courte afin de permettre un réglage de l'intensité à une valeur très élevée, sans pour autant percer/traverser la ou les tôle(s).

La séquence 12 d'application d'un courant continu DC lisse C1 est suivie d'une séquence 14 d'application d'un courant alternatif AC pulsé C3, qui permet de réaliser l'opération de pointage ou de soudage de l'alliage d'aluminium.

La valeur du courant alternatif AC pulsé C3 est comprise/oscille entre environ 1 et 500 ampères et présente une fréquence F1 comprise entre 20 et 500 Hz.

Cette séquence 14 de courant alternatif AC pulsé C3 varie entre un courant de base C31 compris entre 1 et 500 ampères et un courant de pic C32 compris entre 2 et 500 ampères.

Ce courant alternatif AC pulsé C3 est pulsé/généré à une fréquence F2 comprise entre Hz 1 et 20 kHz et présente une durée D3 comprise entre 10 et 1000 ms.

Ce courant alternatif AC pulsé permet d'avoir une constriction de l'arc électrique permettant d'obtenir une précision optimale.

Cette séquence de courant alternatif AC pulsé C3 permet d'assurer une bonne précision de l'arc électrique et d'éviter que l'arc électrique ne soit attiré par une pièce plus que l'autre dans le but de fusionner de façon précise la jonction des deux tôles à assembler.

La durée D3 de la séquence 14 de courant alternatif AC pulsé C3 varie en fonction de la matière et de l'épaisseur des tôles à pointer/souder. Toutefois, cette durée D3 est également relativement courte afin de permettre l'utilisation de courants de soudage élevés/importants, sans pour autant risquer de percer la ou les tôle(s).

C'est donc cet enchainement particulier des séquences qui permet d'obtenir un pointage optimal et simple à réaliser, quelle que soit l'expérience de l'opérateur de soudage.

Selon cet exemple utile à la compréhension de l'invention, la somme des durées D1 et D3 ne doit pas excéder 2 secondes. En d'autres termes, les séquences 12 et 14 d'application des courants C1 et C3 doivent se succéder sans dépasser une durée globale de 2 secondes.

Pour finir, le cycle de pointage 1 comprend, à la suite de la séquence 14 de courant alternatif AC pulsé C3, une séquence 15 de post-gaz qui vise à protéger le bain de fusion une fois la soudure terminée par une temporisation de gaz. La séquence de post-gaz 15 permet aussi de protéger l'électrode de tungstène contre l'oxydation durant son refroidissement. Cette séquence de post-gaz 15 présente une durée D4 comprise entre 10 et 1000 ms.

La **figure 2** est un diagramme simplifié du procédé de pointage du type TIG de deux tôles de la figure 1, au moins une des tôles étant en alliage d'aluminium.

Plus particulièrement, le procédé de pointage 2 met en oeuvre le cycle de pointage 1 de la figure 1 et comprend donc :
- l'application 21 d'une séquence 12 d'un courant continu DC lisse C1 durant une première durée prédéterminée D1 ; et
- l'application 23 d'une séquence 14 d'un courant alternatif AC C3 pulsé durant une troisième durée prédéterminée D3.

Comme précisé ci-dessus, la somme des durées D1 et D3 ne doit pas excéder 2 s (secondes).

Classiquement, ces étapes d'application 21 et 23 des courants C1 et C3 sont précédées d'une étape d'application 20 d'une séquence de pré-gaz 11. Elles sont également suivies d'une étape d'application 24 d'une séquence de post-gaz 15.

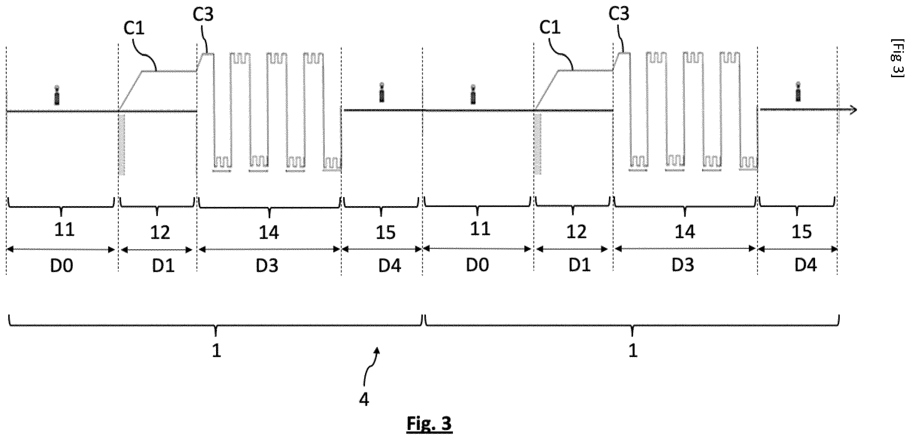

La **figure 3** illustre partiellement un cycle de soudage 4 du type TIG, qui peut être mis en oeuvre à la suite du pointage des deux tôles comme décrit précédemment, afin de souder définitivement ces dernières.

Selon cet exemple utile à la compréhension de l'invention, le cycle de soudage 4 consiste en la répétition du cycle de pointage 1 sur une partie ou sur l'ensemble du joint de soudure, c'est-à-dire la jonction entre les deux tôles. En d'autres termes, une fois que les deux tôles sont pointées, il suffit d'appliquer et de répéter le procédé de pointage 2 pour souder les tôles entre elles.

La figure 3 illustre partiellement un cycle de soudage 4 puisque seulement deux cycles 1 sont représentés. On comprend bien évidemment que le cycle de soudage 4 comprend autant de cycles de pointage 1 qu'il est nécessaire de répéter pour obtenir le soudage souhaité.

Selon une variante (non illustrée), le cycle de soudage 4 peut s'abstenir des séquences de pré-gaz 11 et de post-gaz 15 lors de la répétition du cycle 1. De cette manière, le cycle de soudage 4 est constitué d'un enchainement de la séquence 12 d'application d'un courant continu DC lisse C1 et de la séquence 14 d'application d'un courant alternatif AC C3 pulsé.

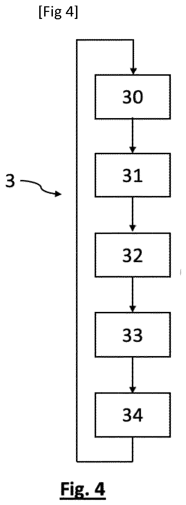

La **figure 4** illustre un procédé de soudage 3 du type TIG selon cet exemple utile à la compréhension de l'invention. Ce procédé de soudage 3 est mis en oeuvre pour souder deux tôles, au moins une des tôles étant en alliage d'aluminium par exemple.

Le procédé de soudage 3 comprend la répétition du cycle de pointage 1 sur au moins une partie ou sur l'ensemble de la jonction entre les tôles.

Plus précisément, le procédé de soudage 3 répète les étapes suivantes :
- l'application 30 d'une séquence de pré-gaz 11 ;
- l'application 31 d'une séquence 12 d'un courant continu DC lisse C1 durant une première durée prédéterminée D1 ;
- l'application 33 d'une séquence 14 d'un courant alternatif AC C3 pulsé durant une troisième durée prédéterminée D3 ; et
- l'application 34 d'une séquence de post-gaz 15.

C'est cet enchainement particulier des séquences de courant, pour effectuer une soudure d'un alliage d'aluminium, qui permet d'obtenir un soudage optimal et simple à réaliser, quelle que soit l'expérience de l'opérateur de soudage.

Selon une variante (non illustrée) de ce premier mode de réalisation, le procédé de soudage 3 répète les étapes suivantes :
- l'application 31 d'une séquence 12 d'un courant continu DC lisse C1 durant une première durée prédéterminée D1 ; et
- l'application 33 d'une séquence 14 d'un courant alternatif AC C3 pulsé durant une troisième durée prédéterminée D3.

Selon une variante de ce premier mode de réalisation, le cycle 1 de pointage comprend un courant continu DC lisse, sensiblement identique au courant C1 décrit ci-dessus, suivi d'un courant alternatif AC lisse.

Le courant alternatif AC lisse présente des valeurs comprises entre 1A et 500A et une fréquence comprise entre 1Hz et 400 Hz. Le courant alternatif AC lisse permet de finaliser le pointage. Le changement de polarité permet également de casser la couche d'alumine afin de souder les tôles en aluminium, par exemple.

Selon une autre variante de ce premier mode de réalisation, le cycle 1 de pointage comprend un courant continu DC pulsé, suivi d'un courant alternatif AC pulsé sensiblement identique au courant C3 décrit ci-dessus.

La valeur du courant continu DC pulsé varie entre un courant de base compris entre 1 et 500 ampères et un courant de pic compris entre 2 et 500 ampères. Ce courant continu DC pulsé est pulsé/généré à une fréquence comprise entre 1Hz et 20 kHz et présente une durée comprise entre 10 et 1000 ms.

Selon encore une autre variante de ce premier mode de réalisation, le cycle 1 de pointage comprend un courant continu DC pulsé, sensiblement identique au courant continu DC pulsé décrit ci-dessus, suivi d'un courant alternatif AC lisse tel que décrit ci-dessus.

On comprend bien évidemment que les principes du procédé de pointage 2, du cycle de soudage 4 et du procédé de soudage 3 décrits ci-dessus sont applicables à ces variantes.

Dans un mode de réalisation conforme à l'invention, et en fonction du matériau et de l'épaisseur des tôles à pointer/souder, le cycle comprend une première séquence de courant continu DC lisse, une deuxième séquence de courant continu DC pulsé et une troisième séquence de courant alternatif AC pulsée.

Ce cycle particulier permet l'obtention d'un pointage et/ou, lorsqu'il est répété sur le joint de soudure (autrement dit la jonction entre les deux tôles), un soudage précis et efficace.

La présente technique facilite les opérations de pointage et de soudage d'une tôle en aluminium, en alliage d'aluminium ou en alliage léger puisqu'elle s'avère relativement simple d'utilisation, rapide à mettre en oeuvre et ne nécessite pas de métal d'apport. Elle est donc à la portée d'opérateurs de soudage de tous niveaux.

On illustre par la suite ce mode de réalisation conforme à l'invention, à l'appui des figures 5 à 8.

La **figure 5** illustre un premier cycle 1', dit cycle de pointage, du type TIG afin de solidariser deux tôles, dont au moins l'une d'entre elles est en aluminium, en alliage d'aluminium, en un alliage léger, préalablement au soudage définitif de ces deux tôles.

Classiquement, ce cycle de pointage 1' comprend une séquence de pré-gaz 11 qui a pour fonction de purger le conduit de la torche de soudage et d'assurer une atmosphère inerte avant l'amorçage.

Cette séquence de pré-gaz 11 présente une durée D0 comprise entre 10 et 1000 ms.

La séquence de pré-gaz 11 est suivie de l'application d'un courant continu DC puis d'un courant alternatif AC.

Plus précisément, le cycle de pointage 1' comprend une première séquence 12 d'application d'un courant continu DC lisse C1. Cette première séquence 12 présente une rampe de montée 121 qui permet une montée progressive du courant de soudage jusqu'à sa valeur nominale. Cette première séquence 12 d'application d'un courant continu DC lisse C1 favorise l'amorçage de l'arc électrique.

De préférence, l'amorçage s'effectue à haute fréquence, ce qui ne nécessite pas de contact de l'électrode avec la tôle. Ainsi, Il n'y a aucun risque d'inclusion de tungstène dans la soudure. Dans une variante, un amorçage au contact pourrait également être utilisé.

Selon ce mode de réalisation conforme à l'invention, la valeur du courant continu DC lisse C1 est comprise entre 1 et 500 ampères. Cette première séquence 12 d'application d'un courant continu DC lisse C1 présente une durée D1 comprise entre 10 et 1000 ms. La rampe de montée 121 présente quant à elle une durée comprise entre 10 et 1000 ms.

La durée D1 varie en fonction de l'épaisseur des tôles à pointer/souder. Toutefois, cette durée D1 est relativement courte afin de permettre un réglage de l'intensité à une valeur très élevée, sans pour autant percer/traverser la ou les tôle(s).

Cette première séquence 12 d'application d'un courant continu DC lisse C1 permet de préchauffer la tôle à assembler et de commencer à affaiblir la couche d'alumine, lors du pointage/soudage d'une tôle en aluminium ou en alliage d'aluminium.

La première séquence 12 d'application d'un courant continu DC lisse C1 est suivie d'une deuxième séquence 13 d'application d'un courant continu DC pulsé C2. Cette deuxième séquence 13 permet une constriction de l'arc électrique et une concentration optimale de ce dernier.

Selon ce mode de réalisation conforme à l'invention, la valeur du courant continu DC pulsé C2 varie entre un courant de base C21 compris entre 1 et 500 ampères et un courant de pic C22 compris entre 2 et 500 ampères.

Ce deuxième courant continu pulsé C2 est pulsé/généré à une fréquence comprise entre 1Hz et 20 kHz. Cette deuxième séquence 13 de courant continu DC pulsé présente une durée D2 comprise entre 10 et 1000 ms. La durée D2 varie également en fonction de l'épaisseur des tôles à pointer/souder.

Ce choix de la demanderesse consistant à pulser l'arc électrique permet d'obtenir une précision de chauffe souhaitée qui soit optimale. En effet, lors du pointage/soudage en TIG pulsé, la constriction de l'arc électrique permet une plus grande précision. Les valeurs de fréquences ont été sélectionnées par la demanderesse à la suite de nombreux tests et recherches effectués.

La deuxième séquence 13 d'application d'un courant continu DC pulsé C2 est suivie d'une troisième séquence 14 d'application d'un courant alternatif AC pulsé C3, qui permet de réaliser l'opération de pointage ou de soudage de l'alliage d'aluminium.

Selon ce mode de réalisation conforme à l'invention, la valeur du courant alternatif AC pulsé C3 est comprise/oscille entre environ 1 et 500 ampères et présente une fréquence F1 comprise entre 20 et 500 Hz.

Cette troisième séquence 14 de courant alternatif AC pulsé C3 varie entre un courant de base C31 compris entre 1 et 500 ampères et un courant de pic C32 compris entre 2 et 500 ampères.

Ce courant alternatif AC pulsé C3 est pulsé/généré à une fréquence F2 comprise entre Hz 1 et 20 kHz et présente une durée D3 comprise entre 10 et 1000 ms. La durée D3 varie de nouveau également en fonction de l'épaisseur des tôles à pointer/souder.

Ce courant alternatif AC pulsé permet d'avoir une constriction de l'arc électrique permettant d'obtenir une précision optimale.

Cette séquence de courant alternatif AC pulsé C3 succède à la séquence de courant continu DC pulsé C2 afin de ne pas perdre les bénéfices du courant continu DC pulsé C2, c'est-à-dire afin de maintenir la précision de l'arc électrique et d'éviter que l'arc électrique ne soit attiré par une pièce plus que l'autre dans le but de fusionner de façon précise la jonction des deux tôles à assembler. La durée D3 de la séquence 14 de courant alternatif AC pulsé C3 est également relativement courte afin de permettre l'utilisation de courants de soudage élevés/importants, sans pour autant risquer de percer la ou les tôle(s).

C'est donc cet enchainement particulier des séquences 12 à 15 qui permet d'obtenir un pointage optimal et simple à réaliser, quelle que soit l'expérience de l'opérateur de soudage.

Selon la présente technique, la somme des durées D1 à D3 ne doit pas excéder 2 secondes. En d'autres termes, les séquences 12, 13 et 14 d'application des courants C1, C2 et C3 doivent se succéder sans dépasser une durée globale de 2 secondes.

La mise en oeuvre successive des séquences 12, 13 et 14 particulières de courant dans ce laps de temps particulier a pour avantage de successivement préchauffer la tôle à assembler, de permettre une constriction de l'arc et de préchauffer de façon très précise un endroit de la tôle (c'est-à-dire la jonction des deux tôles ou tubes à souder), puis de garder le bénéfice du DC pulsé pour finaliser l'assemblage et donc la fusion des deux éléments.

Pour finir, le cycle de pointage 1' comprend, à la suite de la troisième séquence 14 de courant alternatif AC pulsé C3, une séquence 15 de post-gaz qui vise à protéger le bain de fusion une fois la soudure terminée par une temporisation de gaz. La séquence de post-gaz 15 permet aussi de protéger l'électrode de tungstène contre l'oxydation durant son refroidissement

Cette séquence de post-gaz 15 présente une durée D4 comprise entre 10 et 1000 ms.

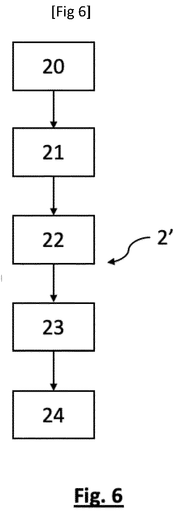

Comme illustré sur la **figure 6****,** la technique de l'invention concerne également un procédé de pointage 2' du type TIG de deux tôles, au moins une des tôles étant en alliage d'aluminium.

Préférentiellement, le procédé de pointage 2' met en oeuvre le cycle de pointage 1' de la figure 5 et comprend donc :
- l'application 21 d'une première séquence 12 d'un courant continu DC lisse C1 durant une première durée prédéterminée D1 ;
- l'application 22 d'une deuxième séquence 13 d'un courant continu DC pulsé C2 durant une deuxième durée prédéterminée D2 ; et
- l'application 23 d'une troisième séquence 14 d'un courant alternatif AC C3 pulsé durant une troisième durée prédéterminée D3.

Comme précisé ci-dessus, la somme des durées D1 à D3 ne doit pas excéder 2 secondes.

Classiquement, ces étapes d'application 21 à 23 des courants C1 à C3 sont précédées d'une étape d'application 20 d'une séquence de pré-gaz 11. Elles sont également suivies d'une étape d'application 24 d'une séquence de post-gaz 15.

Dans une variante, les étapes d'application d'une séquence de pré-gaz 11 et d'une séquence de post-gaz 15 peuvent être supprimées.

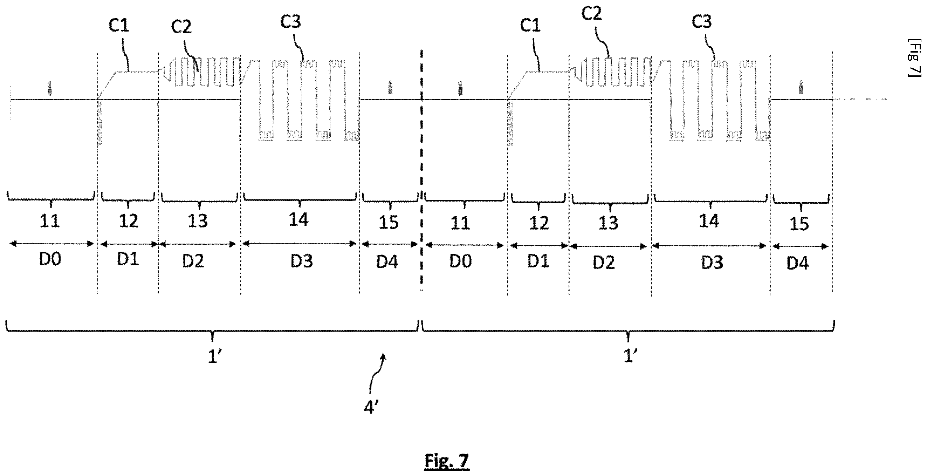

La **figure 7** illustre partiellement un cycle de soudage 4' du type TIG selon l'invention, qui peut être mis en oeuvre à la suite du pointage des deux tôles comme décrit précédemment, afin de souder définitivement ces dernières.

Selon l'invention, le cycle de soudage 4' consiste en la répétition du cycle de pointage 1' sur une partie ou sur l'ensemble du joint de soudure, c'est-à-dire la jonction entre les deux tôles. En d'autres termes, une fois que les deux tôles sont pointées, il suffit d'appliquer et de répéter le procédé de pointage 2' pour souder les tôles entre elles.

La figure 7 illustre partiellement un cycle de soudage 4' puisque seulement deux cycles de pointage 1' sont représentés. On comprend bien évidemment que le cycle de soudage 4' comprend autant de cycles pointage 1' qu'il est nécessaire de répéter pour obtenir le soudage souhaité.

Selon une variante (non illustrée), le cycle de soudage 4' peut s'abstenir des séquences de pré-gaz 11 et de post-gaz 15 lors de la répétition du cycle 1'. De cette manière, le cycle de soudage 4' est constitué d'un enchainement de la première séquence 12 d'application d'un courant continu DC lisse C1, de la deuxième séquence 13 d'application d'un courant continu DC pulsé C2 et de la troisième séquence 14 d'application d'un courant alternatif AC C3 pulsé.

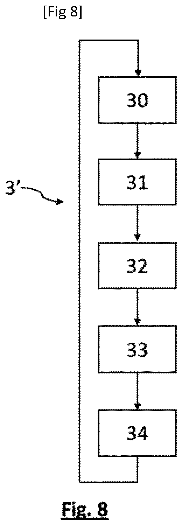

La **figure 8** illustre un procédé de soudage 3' du type TIG selon l'invention. Ce procédé de soudage 3' est mis en oeuvre pour souder deux tôles, au moins une des tôles étant en alliage d'aluminium.

Le procédé de soudage 3' comprend la répétition du premier cycle 1' sur au moins une partie ou sur l'ensemble de la jonction entre les tôles.

Plus précisément, le procédé de soudage 3' répète les étapes suivantes :
- l'application 30 d'une séquence de pré-gaz 11 ;
- l'application 31 d'une première séquence 12 d'un courant continu DC lisse C1 durant une première durée prédéterminée D1 ;
- l'application 32 d'une deuxième séquence 13 d'un courant continu DC pulsé C2 durant une deuxième durée prédéterminée D2 ;
- l'application 33 d'une troisième séquence 14 d'un courant alternatif AC C3 pulsé durant une troisième durée prédéterminée D3 ; et
- l'application 34 d'une séquence de post-gaz 15.

Selon une variante (non illustrée) de ce mode de réalisation, le procédé de soudage 3' répète les étapes suivantes :
- l'application 31 d'une première séquence 12 d'un courant continu DC lisse C1 durant une première durée prédéterminée D1 ;
- l'application 32 d'une deuxième séquence 13 d'un courant continu DC pulsé C2 durant une deuxième durée prédéterminée D2 ;
- l'application 33 d'une troisième séquence 14 d'un courant alternatif AC C3 pulsé durant une troisième durée prédéterminée D3.

C'est cet enchainement particulier des séquences 12 à 14, pour effectuer une soudure d'un alliage d'aluminium, qui permet d'obtenir un soudage optimal et simple à réaliser, quelle que soit l'expérience de l'opérateur de soudage.

La technique proposée concerne également un poste à souder du type TIG comprenant un générateur de courant configuré pour mettre en oeuvre les procédés de pointage 1, 1' et de soudage 3, 3' décrits précédemment.

Un tel poste permet le pointage des tôles ou pièces avant le soudage de ces dernières, c'est-à-dire qu'il permet de réaliser des points de soudure qui assurent le maintien des pièces à assembler avant l'opération de soudage.

Un tel poste comprend en outre, de façon classique, une électrode utilisée pour créer un arc électrique entre l'électrode et les pièces à pointer et souder.

En d'autres termes, le générateur de courant de la présente technique est configuré pour générer un cycle de courants comprenant successivement au moins un courant continu DC lisse ou pulsé, puis au moins un courant alternatif AC lisse ou pulsé.

Préférentiellement, le générateur de courant est configuré pour générer un cycle de courants comprenant successivement :
- une première séquence 12 d'un courant continu DC lisse C1 durant une première durée D1 prédéterminée,
- une deuxième séquence 13 d'un courant continu DC pulsé C2 durant une deuxième durée D2 prédéterminée ; et
- une troisième séquence 14 d'un courant alternatif AC pulsé C3 durant une troisième durée D3 prédéterminée.

Ce générateur de courant, configuré pour générer le cycle de courants spécifique à la technique proposée permet d'effectuer une soudure d'un alliage d'aluminium qui soit optimale et simple à réaliser, quelle que soit l'expérience de l'opérateur de soudage.

## Revendications

1. Procédé de pointage (2') du type TIG de deux tôles ou de deux pièces, telles que des tubes, ledit procédé comprenant, pour chaque zone ou point de pointage desdites tôles ou desdites pièces, un cycle de pointage (1, 1') comprenant successivement l'application d'au moins un courant continu DC lisse ou pulsé, puis d'au moins un courant alternatif AC lisse ou pulsé,
**caractérisé en ce que** ledit cycle de pointage (1) comprend :
- une première séquence (12) d'application d'un courant continu DC lisse (C1) durant une première durée (D1) prédéterminée et une deuxième séquence (13) d'application d'un courant continu DC pulsé (C2) durant une deuxième durée (D2) prédéterminée, ou inversement ; et
- une troisième séquence (14) d'application d'un courant alternatif AC pulsé (C3) durant une troisième durée (D3) prédéterminée.

2. Procédé de pointage (2') selon la revendication 1, **caractérisé en ce que** ledit cycle de pointage (1) comprend :
- une première séquence (12) d'application d'un courant continu DC lisse (C1) durant une première durée (D1) prédéterminée ;
- suivi d'une deuxième séquence (13) d'application d'un courant continu DC pulsé (C2) durant une deuxième durée (D2) prédéterminée ;
- suivi d'une troisième séquence (14) d'application d'un courant alternatif AC pulsé (C3) durant une troisième durée (D3) prédéterminée.

3. Procédé de pointage (2') selon la revendication 1 ou 2, **caractérisé en ce qu'**au moins une desdites tôles ou une desdites pièces est en aluminium, en un alliage d'aluminium ou en un alliage léger.

4. Procédé de pointage (2') selon l'une des revendications 1 à 3, **caractérisé en ce que** lesdites première (12), deuxième (13) et troisième (14) séquences sont réalisées successivement et dans cet ordre, et **en ce que** ledit cycle de pointage (1) présente une durée inférieure ou égale à 2 secondes (s).

5. Procédé de pointage (2') selon l'une des revendications 1 à 4, **caractérisé en ce que** la valeur dudit courant continu lisse (C1) est comprise entre 1 et 500 ampères (A).

6. Procédé de pointage (2') selon l'une des revendications 1 à 5, **caractérisé en ce que** ladite première durée (D1) prédéterminée dudit courant continu lisse (C1) est comprise entre 10 et 1000 millisecondes (ms).

7. Procédé de pointage (2') selon l'une des revendications 1 à 6, **caractérisé en ce que** ledit courant continu pulsé (C2) présente un courant de base (C21) de valeur comprise entre 1 et 500 ampères (A) et un courant de pic (C22) de valeur comprise entre 2 et 500 ampères (A).

8. Procédé de pointage (2') selon l'une des revendications 1 à 7, **caractérisé en ce que** ledit courant continu pulsé (C2) présente une fréquence comprise entre 1Hz et 20 kHz.

9. Procédé de pointage (2') selon l'une des revendications 1 à 8, **caractérisé en ce que** ladite deuxième durée (D2) prédéterminée dudit courant continu pulsé (C2) est comprise entre 10 et 1000 ms.

10. Procédé de pointage (2') selon l'une des revendications 1 à 9, **caractérisé en ce que** ledit courant alternatif pulsé (C3) oscille entre environ 1 et 500 ampères (A) et présente une fréquence (F1) comprise entre 20 et 500 Hz.

11. Procédé de pointage (2') selon l'une des revendications 1 à 10, **caractérisé en ce que** ledit courant alternatif pulsé (C3) varie entre un courant de base (C31) compris entre 1 et 500 ampères (A) et un courant de pic (C32) compris entre 2 et 500 ampères (A).

12. Procédé de pointage (2') selon l'une des revendications 1 à 11, **caractérisé en ce que** ledit courant alternatif pulsé (C3) est pulsé/généré à une fréquence (F2) comprise entre 1 Hz et 20 kHz.

13. Procédé de pointage (2') selon l'une des revendications 1 à 12, **caractérisé en ce que** ladite troisième durée (D3) prédéterminée dudit courant alternatif pulsé (C3) est comprise entre 10 et 1000 ms.

14. Procédé de soudage (3, 3') du type TIG de deux tôles ou de deux pièces, telles que des tubes, ledit procédé de soudage (3, 3') comprenant la répétition du cycle de pointage (1, 1') du procédé de pointage (2, 2') selon l'une des revendications 1 à 13 sur au moins une partie de la jonction entre lesdites tôles ou lesdites pièces.

15. Poste à souder du type TIG comprenant un générateur de courant apte à mettre en oeuvre le procédé de pointage (2, 2') selon l'une des revendications 1 à 13 et ledit procédé de soudage (3, 3') selon la revendication 14.

## Patentansprüche

1. Verfahren zum Heften (2') vom Typ WIG von zwei Blechen oder zwei Werkstücken, wie etwa Rohren, wobei das Verfahren für jeden Heftbereich oder -punkt der Bleche oder der Werkstücke einen Heftzyklus (1, 1') umfasst, der nacheinander das Anlegen mindestens eines glatten oder pulsierenden Gleichstroms, DC, und anschließend mindestens eines glatten oder pulsierenden Wechselstroms, AC, umfasst,
**dadurch gekennzeichnet, dass** der Heftzyklus (1) umfasst:
- eine erste Sequenz (12) des Anlegens eines glatten Gleichstroms, DC, (C1) während einer ersten vorbestimmten Dauer (D1) und eine zweite Sequenz (13) des Anlegens eines pulsierenden Gleichstroms, DC, (C2) während einer zweiten vorbestimmten Dauer (D2), oder umgekehrt; und
- eine dritte Sequenz (14) des Anlegens eines pulsierenden Wechselstroms, AC, (C3) während einer dritten vorbestimmten Dauer (D3).

2. Heftverfahren (2') nach Anspruch 1, **dadurch gekennzeichnet, dass** der Heftzyklus (1) umfasst:
- eine erste Sequenz (12) des Anlegens eines glatten Gleichstroms, DC, (C1) während einer ersten vorbestimmten Dauer (D1);
- gefolgt von einer zweiten Sequenz (13) des Anlegens eines pulsierenden Gleichstroms, DC, (C2) während einer zweiten vorbestimmten Dauer (D2);
- gefolgt von einer dritten Sequenz (14) des Anlegens eines pulsierenden Wechselstroms, AC, (C3) während einer dritten vorbestimmten Dauer (D3).

3. Heftverfahren (2') nach Anspruch 1 oder 2, **dadurch gekennzeichnet, dass** mindestens eines der Bleche oder eines der Werkstücke aus Aluminium, aus einer Aluminiumlegierung oder aus einer Leichtmetalllegierung besteht.

4. Heftverfahren (2') nach einem der Ansprüche 1 bis 3, **dadurch gekennzeichnet, dass** die erste (12), die zweite (13) und die dritte (14) Sequenz nacheinander und in dieser Reihenfolge ausgeführt werden, und dadurch, dass der Heftzyklus (1) eine Dauer von kleiner oder gleich 2 Sekunden (s) aufweist.

5. Heftverfahren (2') nach einem der Ansprüche 1 bis 4, **dadurch gekennzeichnet, dass** der Wert des glatten Gleichstroms (C1) im Bereich zwischen 1 und 500 Ampere (A) liegt.

6. Heftverfahren (2') nach einem der Ansprüche 1 bis 5, **dadurch gekennzeichnet, dass** die erste vorbestimmte Dauer (D1) des glatten Gleichstroms (C1) im Bereich zwischen 10 und 1000 Millisekunden (ms) liegt.

7. Heftverfahren (2') nach einem der Ansprüche 1 bis 6, **dadurch gekennzeichnet, dass** der pulsierende Gleichstrom (C2) einen Basisstrom (C21) mit einem Wert im Bereich zwischen 1 und 500 Ampere (A) und einen Spitzenstrom (C22) mit einem Wert im Bereich zwischen 2 und 500 Ampere (A) aufweist.

8. Heftverfahren (2') nach einem der Ansprüche 1 bis 7, **dadurch gekennzeichnet, dass** der pulsierende Gleichstrom (C2) eine Frequenz im Bereich zwischen 1 Hz und 20 kHz aufweist.

9. Heftverfahren (2') nach einem der Ansprüche 1 bis 8, **dadurch gekennzeichnet, dass** die zweite vorbestimmte Dauer (D2) des pulsierenden Gleichstroms (C2) im Bereich zwischen 10 und 1000 ms liegt.

10. Heftverfahren (2') nach einem der Ansprüche 1 bis 9, **dadurch gekennzeichnet, dass** der pulsierende Wechselstrom (C3) zwischen etwa 1 und 500 Ampere (A) schwingt und eine Frequenz (F1) im Bereich zwischen 20 und 500 Hz aufweist.

11. Heftverfahren (2') nach einem der Ansprüche 1 bis 10, **dadurch gekennzeichnet, dass** der pulsierende Wechselstrom (C3) zwischen einem Basisstrom (C31) im Bereich zwischen 1 und 500 Ampere (A) und einem Spitzenstrom (C32) im Bereich zwischen 2 und 500 Ampere (A) variiert.

12. Heftverfahren (2') nach einem der Ansprüche 1 bis 11, **dadurch gekennzeichnet, dass** der pulsierende Wechselstrom (C3) mit einer Frequenz (F2) im Bereich zwischen 1 Hz und 20 kHz pulsiert/erzeugt wird.

13. Heftverfahren (2') nach einem der Ansprüche 1 bis 12, **dadurch gekennzeichnet, dass** die dritte vorbestimmte Dauer (D3) des pulsierenden Wechselstroms (C3) im Bereich zwischen 10 und 1000 ms liegt.

14. Verfahren zum Schweißen (3, 3') vom Typ WIG von zwei Blechen oder zwei Werkstücken, wie etwa Rohren, wobei das Schweißverfahren (3, 3') das Wiederholen des Heftzyklus (1, 1') des Heftverfahrens (2, 2') nach einem der Ansprüche 1 bis 13 an mindestens einem Teil der Verbindungsstelle zwischen den Blechen oder den Werkstücken umfasst.

15. Schweißmaschine vom Typ WIG, die einen Stromgenerator umfasst, der in der Lage ist, das Heftverfahren (2, 2') nach einem der Ansprüche 1 bis 13 und das Schweißverfahren (3, 3') nach Anspruch 14 umzusetzen.

## Claims

1. Method (2') for tack welding of the TIG type of two sheets or of two parts, such as tubes, said method comprising, for each tack welding zone or point of said sheets or of said parts, a tack welding cycle (1, 1') successively comprising the application of at least one smooth or pulsed DC direct current, then of at least one smooth or pulsed AC alternating current,
**characterised in that** said tack welding cycle (1) comprises:
- a first sequence (12) of applying a smooth DC direct current (C1) during a first predetermined duration (D1) and a second sequence (13) of applying a pulsed DC direct current (C2) during a second predetermined duration (D2), or vice versa; and
- a third sequence (14) of applying a pulsed AC alternating current (C3) during a third predetermined duration (D3).

2. Tack welding method (2') according to claim 1, **characterised in that** said tack welding cycle (1) comprises:
- a first sequence (12) of applying a smooth DC direct current (C1) during a first predetermined duration (D1);
- followed by a second sequence (13) of applying a pulsed DC direct current (C2) during a second predetermined duration (D2);
- followed by a third sequence (14) of applying a pulsed AC alternating current (C3) during a third predetermined duration (D3).

3. Tack welding method (2') according to claim 1 or 2, **characterised in that** at least one of said sheets or one of said parts is made of aluminium, made of an aluminium alloy or made of a light alloy.

4. Tack welding method (2') according to one of claims 1 to 3, **characterised in that** said first (12), second (13) and third (14) sequences are carried out successively and in this order, and **in that** said tack welding cycle (1) has a duration less than or equal to 2 seconds (s).

5. Tack welding method (2') according to one of claims 1 to 4, **characterised in that** the value of said smooth direct current (C1) is between 1 and 500 amperes (A) .

6. Tack welding method (2') according to one of claims 1 to 5, **characterised in that** said first predetermined duration (D1) of said smooth direct current (C1) is between 10 and 1000 milliseconds (ms).

7. Tack welding method (2') according to one of claims 1 to 6, **characterised in that** said pulsed direct current (C2) has a base current (C21) having a value between 1 and 500 amperes (A) and a peak current (C22) having a value between 2 and 500 amperes (A).

8. Tack welding method (2') according to one of claims 1 to 7, **characterised in that** said pulsed direct current (C2) has a frequency between 1Hz and 20Hz.

9. Tack welding method (2') according to one of claims 1 to 8, **characterised in that** said second predetermined duration (D2) of said pulsed direct current (C2) is between 10 and 1000ms.

10. Tack welding method (2') according to one of claims 1 to 9, **characterised in that** said pulsed alternating current (C3) oscillates between approximately 1 and 500 amperes (A) and has a frequency (F1) between 20 and 500Hz.

11. Tack welding method (2') according to one of claims 1 to 10, **characterised in that** said pulsed alternating current (C3) varies between a base current (C31) of between 1 and 500 amperes (A) and a peak current (C32) of between 2 and 500 amperes (A).

12. Tack welding method (2') according to one of claims 1 to 11, **characterised in that** said pulsed alternating current (C3) is pulsed/generated at a frequency (F2) between 1Hz and 20kHz.

13. Tack welding method (2') according to one of claims 1 to 12, **characterised in that** said third predetermined duration (D3) of said pulsed alternating current (C3) is between 10 and 1000ms.

14. Method (3, 3') for welding of the TIG type of two sheets or of two parts, such as tubes, said welding method (3, 3') comprising the repetition of the tack welding cycle (1, 1') of the tack welding method (2, 2') according to one of claims 1 to 13 on at least a part of the junction between said sheets or said parts.

15. Welding station of the TIG type comprising a current generator capable of implementing the tack welding method (2, 2') according to one of claims 1 to 13 and said welding method (3, 3') according to claim 14.
